# EUROPEAN PATENT SPECIFICATION

(11) **EP 3 311 016 B1**
(45) Date of publication and mention of the grant of the patent: **01.05.2019**
(21) Application number: 15738716.8
(22) Date of filing: 17.06.2015
(51) Int. Cl.: F02D 41/00, F02D 41/40, F02D 13/06, F02D 17/02

(54) **METHOD FOR OPERATING MULTI-CYLINDER PISTON ENGINE AND PISTON ENGINE**
VERFAHREN ZUM BETRIEB EINES MEHRZYLINDRIGEN KOLBENMOTORS UND KOLBENMOTOR
PROCÉDÉ D'ACTIONNEMENT DE MOTEUR À PISTON POLYCYLINDRIQUE, ET MOTEUR À PISTON

(43) Date of publication of application: 25.04.2018
(73) Proprietor: Wärtsilä Finland Oy, 65100 Vaasa (FI)
(72) Inventor: VARJOSAARI, Mika, FI-65100 Vaasa (FI)
(74) Representative: Berggren Oy, Helsinki & Oulu
(86) International application number: PCT/FI2015/050445
(87) International publication number: WO 2016/203095

(56) References cited:
- GB-A- 2 484 528
- GB-A- 2 484 528
- US-A1- 2011 203 552
- US-A1- 2015 051 809
- US-A1- 2015 051 816

## Description

### Technical field of the invention

The present invention relates to a method for operating a multi-cylinder piston engine in accordance with the preamble of claim 1. The invention also concerns a piston engine as defined in the preamble of the other independent claim.

### Background of the invention

When a large piston engine, such as a main or an auxiliary engine of a ship or a power plant engine is operated at a very low load, such as a load that is less than 25 percent of the rated output of the engine, part of the cylinders can be deactivated. By using only some of the cylinders of the engine, emissions of the engine can be reduced and the efficiency of the engine can be improved. In this kind of operating mode, which is called skip-firing or active cylinder deactivation, fuel injection into selected cylinders is interrupted for a predetermined number of engine (e.g. in patent documentation US 2012/285161). When the predetermined number of engine cycles has lapsed, fuel injection in the deactivated cylinders is resumed, and the fuel injection is interrupted in another set of cylinders. By alternating the deactivated cylinders according to a predetermined pattern, it is ensured that the temperatures in the deactivated cylinders do not become too low. However, despite of the alternation of the deactivated cylinders, when the fuel injection in a deactivated cylinder is resumed, the combustion in the activated cylinder is weak at least during the first cycle after resuming the fuel injection. The weak combustion causes fluctuation of the engine speed and power. The fluctuation can have a significant magnitude and it can be detected by the engine operator in the form of shaking or swaying of the engine. In addition, the speed/load controller of the engine needs to constantly adjust its settings and it is thus not able to reach a true steady state operation.

### Summary of the invention

An object of the present invention is to provide an improved method for operating a multi-cylinder piston engine. The method comprises the steps of operating a first group of cylinders, which comprises at least one cylinder, in an active state, in which state a first amount of a main fuel is injected into each cylinder of the first group during each cycle of the engine, simultaneously operating a second group of cylinders, which comprises at least one cylinder, in a deactivated state, in which state at least the injection of the main fuel into the cylinders of the second group is deactivated, and activating the fuel injection of the main fuel into the cylinders of the second group by initiating or resuming the fuel injection. In other words, the engine is operated in a skip-firing mode, where the deactivated cylinders are alternated in order to prevent excess temperature decrease in the deactivated cylinders. The characterizing features of the method according to the invention are given in the characterizing part of claim 1. Another object of the invention is to provide an improved piston engine, which comprises a control unit for individually controlling fuel injection amounts in individual cylinders of the engine. The characterizing features of the piston engine according to the invention are given in the characterizing part of the other independent claim.

In the method according to the invention, when the fuel injection of the main fuel into the cylinders of the second group is activated, during the first cycle of the engine a second amount of the main fuel is injected into each cylinder of the second group, the second amount being greater than the first amount.

In the engine according to the invention, the control unit is configured to implement the method defined above.

With the method according to the invention, the weaker combustion occurring during the first engine cycle following operation in a deactivated state can be compensated. The power output of the engine thus remains steady and the engine runs more smoothly.

According to an embodiment of the invention, while the fuel injection into the cylinders of the second group is activated, the fuel injection amount is increased only in the cylinders of the second group. The cylinders of the first group thus receive at most the same amount of the main fuel as before resuming the fuel injection in the second group of cylinders. All or part of the cylinders of the first group can naturally be switched into a deactivated state, if the operation of the engine in the skip-firing mode is continued. By increasing the fuel injection amount only in the recently activated cylinders, the power output of individual cylinders is equalized.

According to an embodiment of the invention, after the first engine cycle during which the second amount of the main fuel is injected into the cylinders of the second group, the fuel injection amount in the cylinders of the second group is decreased. The weaker combustion usually occurs mainly during the first active cycle, and therefore the fuel injection amount can be reduced after the first active cycle. After the first active cycle, the fuel injection amount can be decreased to the first amount. Alternatively, the fuel injection amount can be decreased to a third amount, which is greater than the first amount. This third amount can be used during the second active cycle. In some cases, it may be beneficial that also during the second active cycle the fuel injection amount is slightly greater than in a steady state operation. If the fuel injection amount is decreased after the first active cycle to the third amount and not to the first amount, the fuel injection amount can be reduced to the first amount after the second active cycle.

According to an embodiment of the invention, the second amount of fuel is 20 to 60 percent greater than the first amount of fuel, preferably 25 to 50 percent greater than the first amount of fuel. The suitable increase in the fuel injection amount depends on several factors, but generally an increase in the above mentioned ranges should be appropriate. The third amount of fuel can be, for example, 0 to 25 percent greater than the first amount of fuel.

According to the invention, the main fuel is gaseous fuel. At least a major part of the main fuel can be introduced into an intake duct of the engine. The method according to the invention is particularly beneficial if the engine is operated by introducing gaseous main fuel into the intake duct. During a steady state operation of such an engine, part of the injected fuel remains in the intake duct after the closing of the intake valves. Part of the fuel that flows into the cylinder is thus "fresh" fuel and part of the fuel is residual gas from the previous fuel injections. If a gas admission valve introducing the fuel into the intake duct is closed for one or more engine cycles, the intake duct is purged by the intake air and during the first active cycle of the cylinder, the cylinder receives a smaller amount of fuel than the injected amount. The increased fuel injection amount compensates this difference.

A gaseous main fuel can be ignited by means of liquid pilot fuel and in the deactivated state also the injection of the pilot fuel into the cylinders of the second group can be interrupted. In a gas engine with liquid pilot fuel injection, also the fuel injection amount of the liquid pilot fuel can be increased during the first active cycle of the engine. During the first active cycle, the amount of the injected pilot fuel in the activated cylinders is thus greater than the amount of the pilot fuel that has been injected into the cylinders in a steady state. If an increased injection amount of the main fuel is used also during the second active engine cycle, also the pilot fuel amount can be increased during the second active cycle. With increased pilot fuel injection, the ignition of the main fuel can be advanced.

According to an embodiment of the invention, the second fuel injection amount is selected from a look-up table, where the second fuel injection amounts are based on break mean effective pressure of the engine and the number of deactivated cylinders. This is a simple way to adjust the fuel injection amount according to the operating conditions of the engine.

According to an embodiment of the invention, the indicated mean effective pressure (IMEP) of the engine is monitored and based on the monitoring, the second amount of fuel is optimized such that the IMEP during the first active cycle approaches the IMEP during a steady state operation. The control unit of the engine is thus configured to learn a suitable fuel injection amount for a certain measured IMEP. In this way, the fuel injection amount during the first active cycle of a cylinder is best optimized to ensure that the power output of the cylinder remains steady. The method can be implemented by correcting a look-up table, where the second fuel injection amounts are stored.

### Brief description of the drawings

Embodiments of the invention are described below in more detail with reference to the accompanying drawings, in which
Fig. 1 shows schematically a piston engine,
Fig. 2 shows schematically another piston engine, and
Fig. 3 shows as a flowchart operation of an engine in a skip-firing mode.

### Description of embodiments of the invention

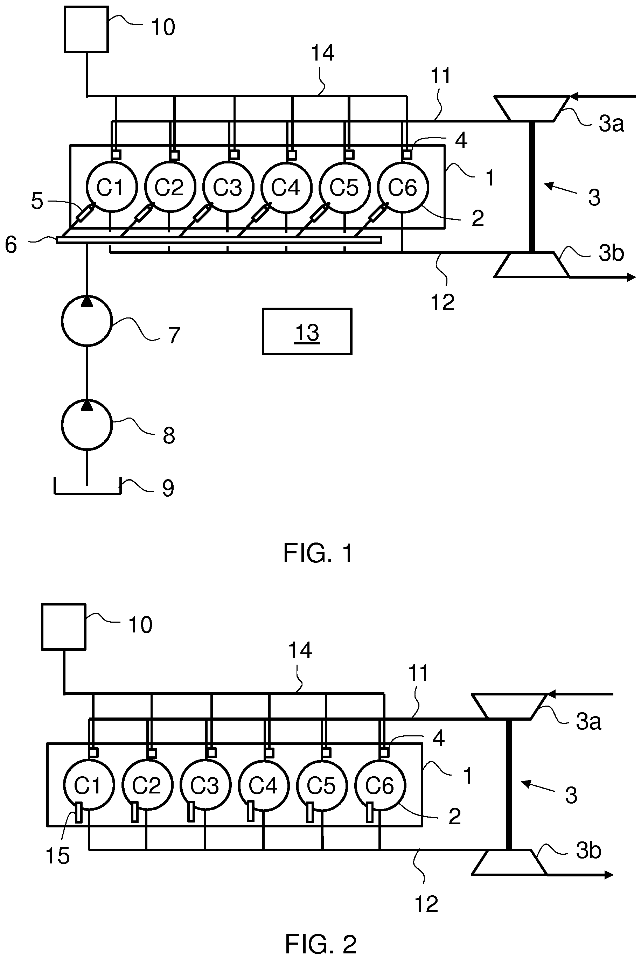

In figure 1 is schematically shown a piston engine 1. The engine 1 is a large internal combustion engine, such as a main or an auxiliary engine of a ship or an engine that is used at a power plant for producing electricity. The rated power of the engine 1 is at least 150 kW per cylinder and the cylinder bore is at least 150 mm. In the example of figure 1, the engine 1 comprises six cylinders 2, which are numbered as cylinders C1 to C6. The cylinders 2 are arranged in line. The engine 1 could comprise any reasonable number of cylinders 2, for instance from 4 to 20, and the cylinders 2 could also be arranged for example in a V-configuration instead of the inline configuration of figure 1. The engine 1 of figure 1 comprises a turbocharger 3 comprising a compressor 3a and a turbine 3b. The engine 1 could also be provided with two or more turbochargers 3, for instance for two-stage turbocharging. However, a turbocharger is not necessary for the operation of the engine 1. Intake air of the engine 1 is introduced into the cylinders 2 of the engine 1 via an intake duct 11. Exhaust gases from the engine 1 are conducted in an exhaust duct 12 into the turbine 3b of the turbocharger 3.

In the embodiment of figure 1, the engine 1 is a gas engine, where a gaseous main fuel is ignited with a liquid pilot fuel. The main fuel can be, for instance, natural gas. The pilot fuel can be, for instance, light fuel oil. Major part of the energy released by the combustion in the cylinders 2 originates from the main fuel. Preferably, less than 10 percent of the energy released by the combustion is from the pilot fuel. The engine 1 is provided with fuel injectors 5 for injecting the pilot fuel into the cylinders 2. Each fuel injector 5 can be individually controlled. The pilot fuel is injected directly into the cylinders 2 of the engine 1. The fuel injectors 5 for the pilot fuel are part of a common rail system, which comprises a fuel rail 6 and a high-pressure pump 7 and a low-pressure pump 8, which supply liquid fuel from a tank 9 into the fuel rail 6. The illustration of the pilot fuel injection system is simplified, and the pilot fuel system can comprise many other components, which are not shown in figure 1. Many other arrangements are possible for the pilot fuel injection. For instance, the number of the fuel rails 6 and the fuel pumps 7, 8 can vary.

The engine 1 further comprises a fuel injection system for gaseous fuel. The fuel injection system for gaseous fuel is provided with gas admission valves 4, which are used for introducing gaseous fuel into the cylinders 2 of the engine 1. The fuel is supplied from a tank 10 via a gas supply line 14 to the gas admission valves 4. Each cylinder 2 of the engine 1 is provided with a gas admission valve 4. The gas admission valves 4 are located so that the fuel can be introduced into the intake duct 11 close to the intake valves of the engine 1. The gaseous fuel is thus not injected directly into the cylinders 2. Therefore, the amount of fuel received by a cylinder 2 is not exactly the same as the injected amount, but part of the injected fuel remains in the intake duct 11 and part of the fuel that has been injected during previous engine cycles flows from the intake duct 11 into the cylinder 2. The gas admission valves 4 can be connected to the cylinder heads of the engine 1. Each gas admission valve 4 can be individually controlled. The fuel injection amount of each cylinder 2 can thus be individually controlled. In practice, the fuel injection amount is controlled by controlling the duration of the fuel injection. The engine 1 comprises an electrical control unit 13, which is used for controlling the opening and closing of the gas admission valves 4. For the sake of clarity, it is not shown how the control unit 13 is connected to the gas admission valves 4. The same control unit 13 can be used for controlling the opening and closing of the fuel injectors 5 of the pilot fuel system.

When the engine load is very load, for instance less than 25 percent of the rated output of the engine 1, the engine 1 can be operated in a skip-firing mode, in which some of the cylinders 2 of the engine 1 are at least partly deactivated. As the load of the engine 1 decreases, the efficiency of the combustion process decreases. The decrease in the efficiency is caused for example by the following factors: The lower cylinder pressure leads to less dense mixture and worse flame propagation, higher air/fuel ratio leads to too lean gas mixture, shorter gas injection duration causes worse gas mixing, and higher portion of the pilot fuel disturbs the combustion of the main fuel. In the skip-firing mode, the load experienced by the active cylinders 2 is increased while the total output of the engine 1 can be kept at the desired level.

If the engine 1 is run for a longer period in the skip-firing mode, the temperature of the deactivated cylinders 2 becomes low. Large temperature gradients in the engine 1 can cause problems, and also the activation of the fuel injection in the deactivated cylinders 2 can be difficult if the temperature in the cylinders 2 is low. To avoid these problems, the deactivated cylinders 2 can be changed. For instance, the fuel injection into cylinders C1, C3 and C5 can be interrupted for a predetermined number of engine cycles, and after the predetermined number of cycles has lapsed, the fuel injection in those cylinders 2 is resumed while fuel injection into cylinders C2, C4, C6 is interrupted. In this way, only half of the cylinders 2 are used for combustion, but the active cylinders 2 are changed at certain intervals.

However, the change of the active cylinders 2 may involve problems. When the fuel injection into a cylinder 2 that has been deactivated is resumed, the combustion in the cylinder 2 is weak during the first cycle following the activation of the cylinder 2. The first cycle following the activation of the cylinder 2, first active cycle or similar expressions refer here to the engine cycle, during which the main fuel is introduced for the first time after an inactive period into the cylinders 2 which have been in a deactivated state. During the first active cycle of a cylinder 2 after an inactive period, the power produced by said cylinder 2 is lower than during a steady state operation of the engine 1. This causes power and speed fluctuation of the engine 1, which can be noticed as shaking or swaying of the engine 1. In addition, the speed/load controller of the engine 1 needs to constantly adjust its settings and can thus not reach a steady state. The above mentioned problems can be reduced or eliminated with the present invention.

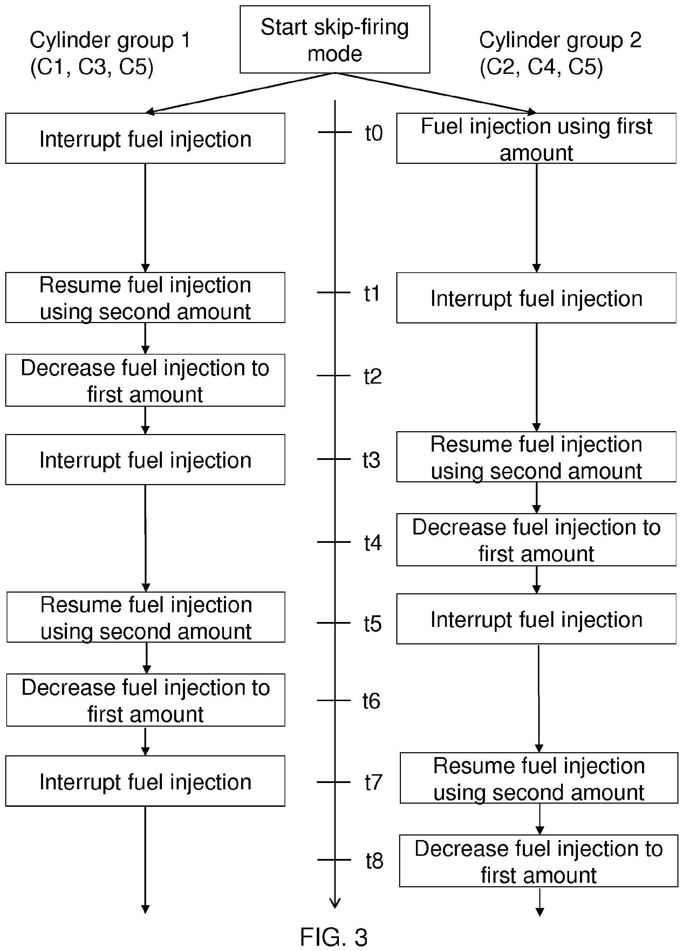

In figure 3 is shown as a flowchart a method for operating the engine 1 in accordance with an embodiment of the invention. In the method, the cylinders 2 of the engine 1 are operated in two groups. Cylinders C1, C3 and C5 form a first group of cylinders (cylinder group 1) and cylinders C2, C4, C6 form a second group of cylinders (cylinder group 2). The engine 1 is operated at a constant load, which is less than 25 percent of the rated power of the engine 1. To keep the output power of the engine 1 at the desired level in a steady state, a certain amount of the main fuel needs to be introduced into each active cylinder 2 of the engine 1 during each cycle of the engine 1. This amount is hereinafter referred to as a first amount of the main fuel. In practice, the amount of the main fuel injected during each cycle of the engine 1 is adjusted by changing the duration of the fuel injection. The fuel is thus injected into the cylinders 2 using a first fuel injection duration. The expression "cycle of the engine" or "engine cycle" refers here to a cycle comprising two rotations of the crankshaft in a four-stroke engine and one rotation in a two-stroke engine. During one engine cycle, fuel is injected into each active cylinder 2 of the engine 1 once.

The amount of the pilot fuel is chosen such that the main fuel is reliably ignited but the proportion of the pilot fuel of the whole fuel injection is kept at minimum. At time t0, the fuel injection into the cylinders C1, C3, C5 of cylinder group 1 is interrupted. Both the injection of the main fuel through the gas admission valves 4 and the injection of the pilot fuel through the fuel injectors 5 are interrupted. The fuel injection in cylinder group 2 continues normally and the first amount of the main fuel is injected into each cylinder C2, C4, C6 of cylinder group 2 during each cycle of the engine 1. The engine 1 is thus operated in the skip-firing mode and the cylinders C1, C3, C5 of cylinder group 1 are in a deactivated state and the cylinders C2, C4, C6 of cylinder group 2 are in an active state. This operation of the engine 1 is continued over a predetermined number of engine cycles.

At time t1, the cylinders C1, C3, C5 of cylinder group 1 are switched into an active state and the cylinders C2, C4, C6 of cylinder group 2 are switched into a deactivated state. The fuel injection in cylinder group 1 is thus resumed, or started, if the engine 1 has been started in the skip-firing mode, and the fuel injection in cylinder group 2 is interrupted. In cylinder group 1, the fuel injection of the main fuel is started using a second fuel injection amount. The second fuel injection amount is greater than the first fuel injection amount, for instance 25 to 50 percent greater. In practice, the fuel injection amount is increased by increasing the duration of the fuel injection by 25 to 50 percent. The fuel is thus injected into the cylinders using a second fuel injection duration, which is longer than the first fuel injection duration. The greater amount of the main fuel compensates for the weaker combustion confronted in the cylinders of cylinder group 1 after interruption of the fuel injection. The ideal increase in the fuel injection amount depends on several factors, such as the engine load, size of the engine, the number of cylinders in the deactivated cylinder group and the type of the fuel. The amount of the pilot fuel that is injected into the cylinders C1, C3, C5 when the fuel injection is resumed may be the same as before the interruption of the fuel injection. Alternatively, also the amount of the pilot fuel may be increased in the same way as the amount of the main fuel. In case also the amount of the pilot fuel injection is increased, the total increase of the fuel injection amount preferably remains in the range of 25 to 50 percent. By increasing the amount of the pilot fuel, the ignition of the main fuel can be advanced. Preferably, if the amount of the pilot fuel injection is increased, the injection timing of the pilot fuel is advanced simultaneously.

The second fuel injection amount can be determined in different ways. As has been discussed above, the needed increase depends on several factors. A simple alternative is to base the second fuel injection amount on the number of deactivated cylinders 2 and break mean effective pressure (BMEP) of the engine 1. A suitable second fuel injection amount is determined for each combination of number of deactivated cylinders and BMEP range. The fuel injection amounts are stored in a look-up table and during the operation of the engine, the control unit 13 monitors the BMEP and the number of deactivated cylinders 2 and selects from the look-up table the corresponding fuel injection amount or fuel injection duration.

For even better optimization of the second fuel injection amount, the indicated mean effective pressure (IMEP) can be measured and the second fuel injection amount can be based on the measurements. The control unit 13 of the engine 1 thus monitors the IMEP and adjusts the second fuel injection amount such that the IMEP during the first active cycle approaches the IMEP during a steady state operation of the engine 1. The control unit 13 thus learns the behavior of the engine 1 and improves the fuel injection control. In this way, the power outputs of individual cylinders 2 can be effectively equalized. Also in this method, the determined values of the second fuel injection amounts can be stored in a look-up table, from which the appropriate amount is selected.

At time t2, the fuel injection amount of the main fuel in the cylinders C1, C3, C5 of cylinder group 1 is decreased to the first amount. The weaker combustion mainly occurs during the first cycle after the interruption of the fuel injection, and therefore time t2 is preferably one engine cycle after time t1. The increased fuel injection amount is thus used only during the first active engine cycle. However, in some cases it may be beneficial to use an increased fuel injection amount also during the second active engine cycle. Therefore, the second fuel injection amount could also be used, for instance, during the first two active engine cycles. It is also possible to use a third fuel injection amount during the second active engine cycle. The third fuel injection amount can be, for instance, 0 to 25 percent greater than the first fuel injection amount. The third fuel injection amount is thus greater than the first fuel injection amount but smaller than the second fuel injection amount. The difference between the third fuel injection amount and the first fuel injection amount can be, for example, 30 to 60 percent of the difference between the second fuel injection amount and the first fuel injection amount. If the engine 1 is operated using also a third fuel injection amount, the fuel injection amount could be reduced at time t1', which is one engine cycle after time t1, to the third fuel injection amount. At time t2, which is one engine cycle after time t1' and two engine cycles after time t1, the fuel injection amount could be reduced to the first amount.

At time t3, the fuel injection in the cylinders C2, C4, C6 of cylinder group 2 is resumed. Simultaneously, fuel injection into the cylinders C1, C3, C5 of cylinder group 1 is interrupted again. Also in cylinder group 2, the fuel injection is resumed using the second fuel injection amount of the main fuel. At time t4, which is preferably one engine cycle after time t3, the fuel injection amount of the main fuel in the cylinders C2, C4, C6 of cylinder group 2 is decreased to the first amount. Again, a third fuel injection amount could be used before decreasing the fuel injection amount to the first fuel injection amount. At time t5, fuel injection into the cylinders C1, C3, C5 of cylinder group 1 is again resumed. Simultaneously, fuel injection into the cylinders C2, C4, C6 of cylinder group 2 is interrupted for the second time. The skip-firing mode is continued according to the same pattern until a change in the engine load or in some other conditions causes a need to change the operating mode.

In the embodiment described above, both the injection of the main fuel and the injection of the pilot fuel is interrupted into the cylinders 2 of the deactivated cylinder group. However, the skip-firing mode could also be implemented by interrupting only the main fuel injection and maintaining the injection of the pilot fuel.

The division of the cylinders 2 of the engine 1 into cylinder groups can be done in many different ways. For instance, the cylinders 2 can be divided into three or more cylinder groups, and the fuel injection is interrupted in one of the cylinder groups at a time. Also, the division into different cylinder groups does not need to be fixed, but it can change according to the need. For instance, at a certain load the engine 1 can be run such that half of the cylinders 2 of the engine 1 are in the deactivated state at a time, and at a greater load only e.g. one third of the cylinders 2 are in the deactivated state at a time. In certain cases, a cylinder group can comprise only one cylinder 2.

Above has been described the operation of a gas engine 1, which uses gaseous main fuel and liquid pilot fuel. An engine that is run using only one type of fuel at a time is operated in a similar way. Figure 2 shows schematically a spark-ignited gas engine 1. The engine 1 of figure 2 differs from the engine 1 of figure 1 that instead of the pilot fuel injectors 5, spark plugs 15 are used for igniting the gaseous main fuel. Each cylinder 2 of the engine 1 is provided with a spark plug 15. At least a major part of the gaseous fuel is introduced into the intake duct 14 of the engine 1 close to the intake valves. However, part of the fuel can be introduced into prechambers. In that case, each cylinder 2 of the engine 1 is provided with a prechamber, which is provided with a separate prechamber valve for controlling the admission of the fuel into the prechamber. The spark plug 15 can be arranged in the prechamber. The prechamber allows introducing of a lean fuel/air mixture into the main combustion chamber and igniting of a richer mixture in the prechamber.

In a spark-ignited gas engine, a pilot fuel is not needed. When switching a deactivated group of cylinders 2 into an active state, only the amount of the main fuel is thus increased to the second amount. If the engine 1 is provided with prechambers, the engine 1 can be operated such that the fuel injection amount into the prechambers is kept constant and only the amount injected into the intake duct 11 is increased. An optimal fuel/air ratio for ignition can thus be maintained, while the increased fuel injection into the intake duct 11 ensures that the performance of the cylinders 2 is at the desired level also during the first active engine cycle following a deactivated state.

It will be appreciated by a person skilled in the art that the invention is not limited to the embodiments described above, but may vary within the scope of the appended claims.

## Claims

1. A method for operating a multi-cylinder piston engine (1) at a constant load using a gaseous main fuel and introducing at least a major part of the gaseous main fuel into an intake duct (11) of the engine (1), wherein the engine (1) is operated in a skip-firing mode, where deactivated cylinders are alternated for preventing excess temperature decrease in the deactivated cylinders, the method comprising the steps of
- operating a first group of cylinders (2), which comprises at least one cylinder (2), in an active state, in which state a first amount of a main fuel is injected into each cylinder (2) of the first group during each cycle of the engine (1) using a first fuel injection duration,
- simultaneously operating a second group of cylinders (2), which comprises at least one cylinder (2), in a deactivated state, in which state at least the injection of the main fuel into the cylinders (2) of the second group is deactivated, and
- activating the fuel injection of the main fuel into the cylinders (2) of the second group by initiating or resuming the fuel injection,
wherein when the fuel injection of the main fuel into the cylinders (2) of the second group is activated, during the first cycle of the engine (1) a second amount of the main fuel is injected into each cylinder (2) of the second group, the second amount being greater than the first amount, wherein the main fuel is gaseous fuel and the second amount of the gaseous main fuel is injected using a second fuel injection duration, which is 25 to 50 percent greater than the first fuel injection duration.

2. A method according to claim 1, wherein while the fuel injection into the cylinders (2) of the second group is activated, the fuel injection amount is increased only in the cylinders (2) of the second group.

3. A method according to claim 1 or 2, wherein after the first engine cycle during which the second amount of the main fuel is injected into the cylinders (2) of the second group, the fuel injection amount in the cylinders (2) of the second group is decreased.

4. A method according to any of the preceding claims, wherein the second amount of fuel is 25 to 50 percent greater than the first amount of fuel.

5. A method according to any of the preceding claims, wherein when the fuel injection into the cylinders (2) of the second group is activated, during the second cycle of the engine (1) a third amount of the main fuel is injected into each cylinder (2) of the second group, the third amount being greater than the first amount.

6. A method according to claim 5, wherein the third amount of fuel is at most 25 percent greater than the first amount of fuel.

7. A method according to any of the preceding claims, wherein after the engine cycle during which the second amount or the third amount of the main fuel is injected into the cylinders (2) of the second group, the fuel injection amount in the cylinders (2) of the second group is decreased to the first amount.

8. A method according to any of the preceding claims, wherein the main fuel is ignited by means of liquid pilot fuel and in the deactivated state also the injection of the pilot fuel into the cylinders (2) of the second group is interrupted.

9. A method according to any of claims 1 to 7, wherein the main fuel is ignited by means of liquid pilot fuel and in the deactivated state the injection of the pilot fuel into the cylinders (2) of the second group is maintained.

10. A method according to any of the preceding claims, wherein the main fuel is ignited by means of liquid pilot fuel, and when the fuel injection of the main fuel into the cylinders (2) of the second group is activated, at least during the first cycle of the engine (1) also the fuel injection amount of the liquid pilot fuel in the cylinders (2) of the second group is increased compared to the fuel injection amount of the liquid pilot fuel used in the cylinders (2) of the first group before activating the fuel injection of the main fuel into the cylinders (2) of the second group.

11. A method according to any of the preceding claims, wherein the second fuel injection amount is selected from a look-up table, where the second fuel injection amounts are based on break mean effective pressure of the engine (1) and the number of deactivated cylinders (2).

12. A method according to any of the preceding claims, wherein the indicated mean effective pressure (IMEP) of the engine (1) is monitored, and based on the monitoring the second amount of fuel is optimized such that the IMEP during the first active cycle approaches the IMEP during a steady state operation.

13. A piston engine (1) comprising a control unit (13) for individually controlling fuel injection amounts in individual cylinders (2) of the engine (1), **characterized in that** the control unit (13) is configured to implement the method according to any of the preceding claims.

## Patentansprüche

1. Verfahren zum Betrieb eines mehrzylindrigen Kolbenmotors (1) mit konstanter Last unter Benutzung eines gasförmigen Hauptkraftstoffs und Einleitung wenigstens eines größeren Teils des gasförmigen Hauptkraftstoffs in einen Einlasskanal (11) des Motors (1), wobei der Motor (1) in einem Skip-Firing-Modus betrieben wird, bei dem deaktivierte Zylinder zum Verhindern einer zu starken Temperaturabnahme in den deaktivierten Zylindern abgewechselt werden, wobei das Verfahren folgende Schritte umfasst:
- Betreiben einer ersten Gruppe von Zylindern (2), die wenigstens einen Zylinder (2) umfasst, in einem aktiven Zustand, wobei in diesem Zustand während jedes Zyklus des Motors (1) eine erste Menge eines Hauptkraftstoffs unter Benutzung einer ersten Kraftstoffeinspritzdauer in jeden Zylinder (2) der ersten Gruppe eingespritzt wird,
- gleichzeitiges Betreiben einer zweiten Gruppe von Zylindern (2), die wenigstens einen Zylinder (2) umfasst, in einem deaktivierten Zustand, wobei in diesem Zustand wenigstens die Einspritzung des Hauptkraftstoffs in die Zylinder (2) der zweiten Gruppe deaktiviert ist, und
- Aktivieren der Kraftstoffeinspritzung des Hauptkraftstoffs in die Zylinder (2) der zweiten Gruppe durch Beginnen oder Wiederaufnehmen der Kraftstoffeinspritzung,
wobei, wenn die Kraftstoffeinspritzung des Hauptkraftstoffs in die Zylinder (2) der zweiten Gruppe aktiviert ist, während des ersten Zyklus des Motors (1) eine zweite Menge des Hauptkraftstoffs in jeden Zylinder (2) der zweiten Gruppe eingespritzt wird, wobei die zweite Menge größer ist als die erste Menge, wobei der Hauptkraftstoff gasförmiger Kraftstoff ist und die zweite Menge des gasförmigen Hauptkraftstoffs unter Benutzung einer zweiten Kraftstoffeinspritzdauer eingespritzt wird, die 25 bis 50 Prozent länger ist als die erste Kraftstoffeinspritzdauer.

2. Verfahren nach Anspruch 1, wobei, während die Kraftstoffeinspritzung in die Zylinder (2) der zweiten Gruppe aktiviert ist, die Kraftstoffeinspritzmenge nur in den Zylindern (2) der zweiten Gruppe erhöht ist.

3. Verfahren nach Anspruch 1 oder 2, wobei nach dem ersten Motorzyklus, während dessen die zweite Menge des Hauptkraftstoffs in die Zylinder (2) der zweiten Gruppe eingespritzt wird, die Kraftstoffeinspritzmenge in den Zylindern (2) der zweiten Gruppe verringert ist.

4. Verfahren nach einem der vorhergehenden Ansprüche, wobei die zweite Kraftstoffmenge 25 bis 50 Prozent größer ist als die erste Kraftstoffmenge.

5. Verfahren nach einem der vorhergehenden Ansprüche, wobei, wenn die Kraftstoffeinspritzung in die Zylinder (2) der zweiten Gruppe aktiviert ist, während des zweiten Zyklus des Motors (1) eine dritte Menge des Hauptkraftstoffs in jeden Zylinder (2) der zweiten Gruppe eingespritzt wird, wobei die dritte Menge größer ist als die erste Menge.

6. Verfahren nach Anspruch 5, wobei die dritte Kraftstoffmenge höchstens 25 Prozent größer ist als die erste Kraftstoffmenge.

7. Verfahren nach einem der vorhergehenden Ansprüche, wobei nach dem Motorzyklus, während dessen die zweite Menge oder die dritte Menge des Hauptkraftstoffs in die Zylinder (2) der zweiten Gruppe eingespritzt wird, die Kraftstoffeinspritzmenge in den Zylindern (2) der zweiten Gruppe auf die erste Menge verringert wird.

8. Verfahren nach einem der vorhergehenden Ansprüche, wobei der Hauptkraftstoff mittels flüssigen Pilotkraftstoffs gezündet wird und im deaktivierten Zustand auch die Einspritzung des Pilotkraftstoffs in die Zylinder (2) der zweiten Gruppe unterbrochen ist.

9. Verfahren nach einem der Ansprüche 1 bis 7, wobei der Hauptkraftstoff mittels flüssigen Pilotkraftstoffs gezündet wird und im deaktivierten Zustand die Einspritzung des Pilotkraftstoffs in die Zylinder (2) der zweiten Gruppe aufrechterhalten wird.

10. Verfahren nach einem der vorhergehenden Ansprüche, wobei der Hauptkraftstoff mittels flüssigen Pilotkraftstoffs gezündet wird und, wenn die Kraftstoffeinspritzung des Hauptkraftstoffs in die Zylinder (2) der zweiten Gruppe aktiviert ist, wenigstens während des ersten Zyklus des Motors (1) auch die Kraftstoffeinspritzmenge des flüssigen Pilotkraftstoffs in den Zylindern (2) der zweiten Gruppe erhöht ist, verglichen mit der Kraftstoffeinspritzmenge des flüssigen Pilotkraftstoffs, die vor dem Aktivieren der Kraftstoffeinspritzung des Hauptkraftstoffs in die Zylinder (2) der zweiten Gruppe in den Zylindern (2) der ersten Gruppe benutzt wird.

11. Verfahren nach einem der vorhergehenden Ansprüche, wobei die zweite Kraftstoffeinspritzmenge aus einer Verweistabelle ausgewählt wird, wobei die zweiten Kraftstoffeinspritzmengen auf dem Mitteldruck des Motors (1) und der Anzahl deaktivierter Zylinder (2) basieren.

12. Verfahren nach einem der vorhergehenden Ansprüche, wobei der indizierte Mitteldruck (*indicated mean effective pressure* - IMEP) des Motors (1) überwacht wird und basierend auf der Überwachung der zweiten Kraftstoffmenge derart optimiert wird, dass der IMEP während des ersten aktiven Zyklus dem IMEP während eines stationären Betriebs nahekommt.

13. Kolbenmotor (1), der eine Steuereinheit (13) zum einzelnen Steuern von Kraftstoffeinspritzmengen in einzelnen Zylindern (2) des Motors (1) umfasst, **dadurch gekennzeichnet, dass** die Steuereinheit (13) dazu ausgestaltet ist, das Verfahren nach einem der vorhergehenden Ansprüche zu realisieren.

## Revendications

1. Procédé pour le fonctionnement d'un moteur à piston polycylindrique (1) à une charge constante, en utilisant un carburant principal gazeux et en introduisant au moins une majeure partie du carburant principal gazeux dans un conduit d'admission (11) du moteur (1), dans lequel le moteur (1) est actionné dans un mode d'allumage à saut, dans lequel des cylindres désactivés sont alternés pour empêcher une diminution de température excessive dans les cylindres désactivés, le procédé comprenant les étapes suivantes :
- actionnement d'un premier groupe de cylindres (2), lequel comprend au moins un cylindre (2), dans un état actif dans lequel une première quantité d'un carburant principal est injectée dans chaque cylindre (2) du premier groupe durant chaque cycle du moteur (1) à l'aide d'une première durée d'injection de carburant,
- actionnement simultané d'un deuxième groupe de cylindres (2), lequel comprend au moins un cylindre (2), dans un état désactivé dans lequel au moins l'injection du carburant principal dans les cylindres (2) du deuxième groupe est désactivée, et
- activation de l'injection de carburant du carburant principal dans les cylindres (2) du deuxième groupe par démarrage ou arrêt de l'injection de carburant,
dans lequel, lorsque l'injection de carburant du carburant principal dans les cylindres (2) du deuxième groupe est activée, durant le premier cycle du moteur (1), une deuxième quantité de carburant principal est injectée dans chaque cylindre (2) du deuxième groupe, la deuxième quantité étant supérieure à la première quantité, le carburant principal étant un carburant gazeux et la deuxième quantité du carburant principal gazeux étant injectée à l'aide d'une deuxième durée d'injection de carburant, laquelle est de 25 à 50 pourcent plus longue que la première données de capteur déterminées.

2. Procédé selon la revendication 1, dans lequel, pendant que l'injection de carburant dans les cylindres (2) du deuxième groupe est activée, la quantité d'injection de carburant est augmentée uniquement dans les cylindres (2) du deuxième groupe.

3. Procédé selon la revendication 1 ou 2, dans lequel, après le premier cycle du moteur, pendant lequel la deuxième quantité du carburant principal est injectée dans les cylindres (2) du deuxième groupe, la quantité d'injection de carburant dans les cylindres (2) du deuxième groupe est diminuée.

4. Procédé selon l'une quelconque des revendications précédentes, dans lequel la deuxième quantité de carburant est supérieure de 25 à 50 pourcent à la première quantité de carburant.

5. Procédé selon l'une quelconque des revendications précédentes, dans lequel, lorsque l'injection de carburant dans les cylindres (2) du deuxième groupe est activée, pendant le deuxième cycle du moteur (1), une troisième quantité du carburant principal est injectée dans chaque cylindre (2) du deuxième groupe, la troisième quantité étant supérieure à la première quantité.

6. Procédé selon la revendication 5, dans lequel la troisième quantité de carburant est supérieure de 25 pourcent maximum à la première quantité de carburant.

7. Procédé selon l'une quelconque des revendications précédentes, dans lequel, après le cycle du moteur pendant lequel la deuxième quantité ou la troisième quantité du carburant principal est injectée dans les cylindres (2) du deuxième groupe, la quantité d'injection de carburant dans les cylindres (2) du deuxième groupe est réduite à la première quantité.

8. Procédé selon l'une quelconque des revendications précédentes, dans lequel le carburant principal est allumée à l'aide d'un carburant pilote liquide, et dans l'état désactivé l'injection du carburant pilote dans les cylindres (2) du deuxième groupe est également interrompue.

9. Procédé selon l'une quelconque des revendications 1 à 7, dans lequel le carburant principal est allumé à l'aide d'un carburant pilote liquide, et dans l'état désactivé l'injection du carburant pilote dans les cylindres (2) du deuxième groupe est maintenue.

10. Procédé selon l'une quelconque des revendications précédentes, dans lequel le carburant principal est allumé à l'aide d'un carburant pilote liquide, et lorsque l'injection de carburant du carburant principal dans les cylindres (2) du deuxième groupe est activée, au moins durant le premier cycle du moteur (1), la quantité d'injection de carburant du carburant pilote liquide dans les cylindres (2) du deuxième groupe est également augmentée en comparaison avec la quantité d'injection de carburant du carburant pilote liquide utilisé dans les cylindres (2) du premier groupe avant l'activation de l'injection de carburant du carburant principal dans les cylindres (2) du deuxième groupe.

11. Procédé selon l'une quelconque des revendications précédentes, dans lequel la deuxième quantité d'injection de carburant est sélectionnée à partir d'une table de consultation, où les deuxièmes quantités d'injection de carburant sont basées sur une pression effective moyenne de rupture du moteur (1) et sur le nombre de cylindres (2) désactivés.

12. Procédé selon l'une quelconque des revendications précédentes, dans lequel la pression effective moyenne indiquée (IMEP) du moteur (1) est surveillée, et sur la base de la surveillance, la deuxième quantité de carburant est optimisée de telle façon que l'IMEP pendant le premier cycle actif se rapproche de l'IMEP pendant un fonctionnement dans un état d'équilibre.

13. Moteur à piston (1) comprenant une unité de commande (13) destinée à commander individuellement des quantités d'injection de carburant dans des cylindres (2) individuels du moteur (1), **caractérisé en ce que** l'unité de commande (13) est configurée pour mettre en oeuvre le procédé selon l'une quelconque des revendications précédentes.
